# EUROPEAN PATENT APPLICATION

(11) **EP 3 312 318 A1**
(43) Date of publication of application: **25.04.2018**
(21) Application number: 17195428.2
(22) Date of filing: 09.10.2017
(51) Int. Cl.: D01H 13/32

(54) **SPINNING MANAGEMENT SYSTEM AND SPINNING MANAGEMENT METHOD**

(30) Priority: 19.10.2016 JP 2016205564
(71) Applicant: Murata Machinery, Ltd., Kyoto-shi, Kyoto 601-8326 (JP)
(72) Inventor: Enami, Satoshi, Kyoto, 612-8686 (JP)
(74) Representative: Hoffmann Eitle

(57) **Abstract**

A spinning management system (100) includes spinning groups (1-1, 1-2, ..., 1-n) and a management device (31). The spinning group (1-1, 1-2, ..., 1-n) includes spinning machines (11) and an information collecting device (13). The information collecting device (13) collects information about a plurality of parameters as spinning information about the spinning machines and spun yarns. Based on the spinning information collected by the information collecting device (13), the management device (31) generates management data such that the spinning information about at least two parameters can be displayed graphically to be mutually mapped.

## Description

### BACKGROUND OF THE INVENTION

### 1. Field of the Invention

The present invention relates to a spinning management system and a spinning management method that manage information about a spinning machine and a spun yarn spun by the spinning machine.

### 2. Description of the Related Art

A spinning machine that spins fiber to form a spun yarn is known in the art.

An example of such a spinning machine is disclosed in Japanese Patent Application Laid-Open No. 2013-67871.

### SUMMARY OF THE INVENTION

Typically, the spinning mills are installed at various different locations, and several spinning machines are arranged in each of the spinning mills.

To achieve effective and appropriate operation of all the spinning machines, it is effective to centrally manage information about operating statuses of the spinning machines and / or information about a quality of the spun yarns produced by the spinning machines.

The information about the spinning machines, the spun yarns, and the like is generally obtained as digital data. However, because the data quantity is enormous, a user of the spinning mill (owner, manager, maintenance staff, operator, and the like) cannot determine how to fully utilize this enormous information displayed in the form of the digital data to effectively operate the spinning machines, or great labor is required in this determination.

One object of the present invention is to perform management and information processing of spinning information of a plurality of spinning groups effectively, and to convert the spinning information into data in a format that can be exploited by the user, and present the data to the user.

A plurality of embodiments are explained below as a means for solving the problem. These embodiments can be combined as desired.

A spinning management system according to one aspect of the present invention includes a plurality of spinning groups each including a plurality of spinning machines and at least one information collecting device; and a management device communicably connected to the information collecting device of each of the spinning groups. A plurality of spinning units that respectively spins fiber to form a spun yarn is arranged side by side in the spinning machines. The information collecting device collects information about a plurality of parameters as spinning information about the spinning machines and the spun yarns. The management device extracts information about at least two parameters among the information about the parameters collected by the information collecting device included in at least one of the spinning groups, and generates management data such that the extracted information about the parameters can be displayed graphically to be mutually mapped.

Accordingly, the user of each of the spinning groups (for example, each of spinning mills) can easily confirm the meaning of the enormous quantity of the spinning information from the management data having a format that is easy to understand. As a result, the user can easily perform consideration relating to the use of the spinning machines based on the enormous quantity of the spinning information. Moreover, the quantity of the information that is acquired from the spinning groups is enormous, and great labor is usually required in managing and processing such enormous quantity of the information. However, according to the present invention, because the management data is generated after extracting only predetermined information, information processing load can be suppressed, and the management data that is easy for the user to understand and that is exploitable by the user can be generated.

In the above spinning management system, the management device can extract information about a first parameter and information about a second parameter among the information about the parameters. Moreover, the management device can generate the management data such that a relation between the information about the first parameter and the information about the second parameter can be displayed graphically. By visually representing the relation between the first parameter and the second parameter in two dimensions, the management data that is easier to understand can be provided to the user.

In the above spinning management system, the first parameter can be an operation month of the spinning machines, and the second parameter can be a parameter about a quality of the spun yarns formed in the spinning machines. From the management data that includes the first parameter and the second parameter, a temporal change in the quality of the spun yarns formed in the spinning machines can be visually confirmed.

In the above spinning management system, the first parameter can be a parameter about a first quality of the spun yarns, and the second parameter can be a parameter about a second quality of the spun yarns. From the management data that includes the first parameter and the second parameter, a correlation between two different quality parameters of the spun yarns (the first quality and the second quality) can be visually confirmed.

In the above spinning management system, the first parameter can be an operation month of the spinning machines, and the second parameter can be a parameter about an operating status of the spinning machines. From the management data that includes the first parameter and the second parameter, a temporal change in the operating status of the spinning machines in a spinning system can be visually confirmed.

In the above spinning management system, the first parameter can be a parameter about a first operating status of the spinning machines, and the second parameter can be a parameter about a second operating status of the spinning machines. From the management data that includes the first parameter and the second parameter, a correlation between two different operating status parameters of the spinning machines (the first operating status and the second operating status) can be visually confirmed. Alternatively, the first parameter can be a parameter about a formation condition of the spun yarns, and the second parameter can be one between a parameter about an operating status of the spinning machines and a parameter about a quality of the spun yarns. From the management data that includes the first parameter and the second parameter, the formation condition of the spun yarns that is most suitable for every operating status of the spinning machines or every quality of the spun yarns can be found out easily. Alternatively, the first parameter can be a speed at which the spinning machines form the spun yarns. Accordingly, the spinning speed that is suitable for every operating status and every quality of the spun yarn can be found out easily.

In the above spinning management system, the management data can include a first visual data that visually represents the spinning information in one of the spinning groups and a second visual data that visually represents the spinning information in other of the spinning groups. From the management data, the spinning information in the one of the spinning groups and the spinning information in the other of the spinning groups can be visually compared with each other.

In the above spinning management system, the management data can include averaged visual data that visually represents averaged spinning information obtained by calculating an average of the spinning information acquired from at least three spinning groups. From the management data, what is the status of the spinning information of a particular spinning group compared to the average of the spinning groups can be visually confirmed.

In the above spinning management system, each of the spinning units can include a yarn monitoring device. The yarn monitoring device detects a defect of the spun yarn. In such a configuration, the spinning information includes information about the defects of the spun yarns detected by the yarn monitoring devices.

In the above spinning management system, the information collecting device can manage by mapping identification information for identifying the spinning group to which the information collecting device belongs with the spinning information acquired by the information collecting device. In such a configuration, the management device collects the spinning information mapped with the identification information. By acquiring the spinning information of a particular spinning group identified by using the identification information, the management device can efficiently generate worthwhile management data from relatively small amount of the spinning information.

In the above spinning management system, one between the information collecting device and the management device can obtain one value from information about some parameters among the parameters per predetermined unit and can generate the management data based on the value. In such a configuration, the predetermined unit is one among the spinning machines, the spinning groups, and the formation condition of the spun yarns.

A spinning management method according to another aspect of the present invention is a method implemented on a plurality of spinning groups. Each of the spinning groups includes a plurality of spinning machines, and at least one information collecting device. The information collecting device collects information about a plurality of parameters as spinning information about the spinning machines and spun yarns formed by the spinning machines. The spinning management method includes extracting information about at least two parameters from the spinning information collected by the information collecting device; and generating management data such that the extracted information about the parameters can be displayed graphically to be mutually mapped.

With the above spinning management system and the spinning management method it is possible to perform management and information processing of the information of the spinning groups effectively, and to convert the information into data in a format that can be exploited by the user, and present the data to the user.

In the above explanation, the meaning of "a plurality of" also includes "a predetermined number of".

### BRIEF DESCRIPTION OF THE DRAWINGS

FIG. 1 is a view of a configuration of a spinning management system according to a first embodiment.
FIG. 2 is a view of a configuration of a spinning machine.
FIG. 3 is a view of a control configuration of the spinning machine.
FIG. 4 is a flowchart of an operation for acquiring spinning information in a spinning system.
FIG. 5 depicts an example of the spinning information.
FIG. 6 is a flowchart of an operation performed by a management server system.
FIG. 7 depicts an example of collected data.
FIG. 8A depicts an example of management data representing a relation between an operation month and an efficiency.
FIG. 8B depicts an example of management data representing a relation between the operation month and CUT.
FIG. 8C depicts an example of management data representing a relation between the operation month and STOP.
FIG. 8D depicts an example of management data representing a relation between the operation month and MISS.
FIG. 9A depicts an example of management data representing a relation between the operation month and A1.
FIG. 9B depicts an example of management data representing a relation between the operation month and HD.
FIG. 9C depicts an example of management data representing a relation between the operation month and CV.
FIG. 10A depicts an example of management data representing a relation between HD and A1.
FIG. 10B depicts an example of management data representing a relation between CV and A1.
FIG. 11A depicts an example of management data representing a relation between CUT and STOP.
FIG. 11B depicts an example of management data representing a relation between CUT and the efficiency.
FIG. 12A depicts an example of management data representing a relation between a spun yarn count and A1.
FIG. 12B depicts an example of management data representing a relation between the spun yarn count and CUT.
FIG. 13 depicts an example of management data representing a relation between A1 and CUT.

### DETAILED DESCRIPTION

### 1. First Embodiment

### (1) Spinning Management System

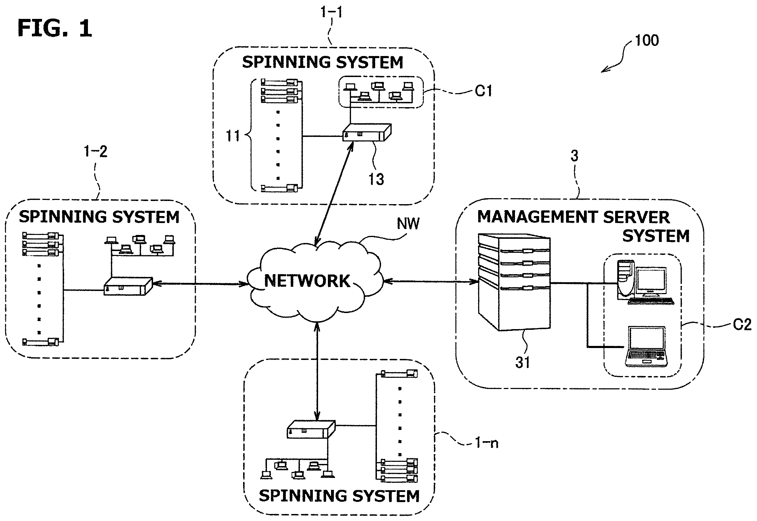

A spinning management system 100 according to a first embodiment is explained below. The spinning management system 100 according to the first embodiment is a system that mass-forms spun yarns Y at many spun yarn production sites (spinning mills), and collects and manages information relating to the spun yarns Y formed in those spinning mills and various information about spinning machines 11 installed in each of the spinning mills. As shown in FIG. 1, the spinning management system 100 includes a plurality of spinning systems (spinning groups) 1-1, 1-2, ..., 1-n and a management server system (management system) 3.

Each of the spinning systems 1-1, 1-2, ..., 1-n is a group installed in a separate spinning mill and forms (produces) the spun yarns Y in that spinning mill. Though only three spinning systems have been shown in FIG. 1, a desired number of the spinning systems can be arranged in the spinning management system 100. Each of the spinning systems 1-1, 1-2, ..., 1-n forms the spun yarns Y, and collects and manages, as spinning information, information about a quality (quality parameter) of the spun yarns Y formed in later-explained spinning units 111, information about a formation condition (formation parameter) of the spun yarns Y set in each of the spinning systems, and information about operating statuses (operation parameter) of the spinning machines 11 or the spinning units 111.

The management server system 3, for example, is arranged in an establishment (for example, a manufacturer of the spinning systems 1-1, 1-2, ..., 1-n) that manages and / or maintains the spinning systems 1-1, 1-2, ..., 1-n. Moreover, the management server system 3 can collect the spinning information from each of the spinning systems 1-1, 1-2, ..., 1-n that are connected thereto via a network NW (for example, WAN). Moreover, the management server system 3 manages the spinning information collected from the spinning systems 1-1, 1-2, ..., 1-n, and when the need arises, generates desired data (management data) by processing the spinning information.

With such a configuration, the spinning management system 100 can collect and manage the spinning information from the spinning systems 1-1, 1-2, ..., 1-n, and when the need arises, can generate the desired data about the spinning machines and the spun yarns by subjecting the spinning information to data processing.

### (2) Spinning System

### (2-1) Schematic Configuration of Spinning System

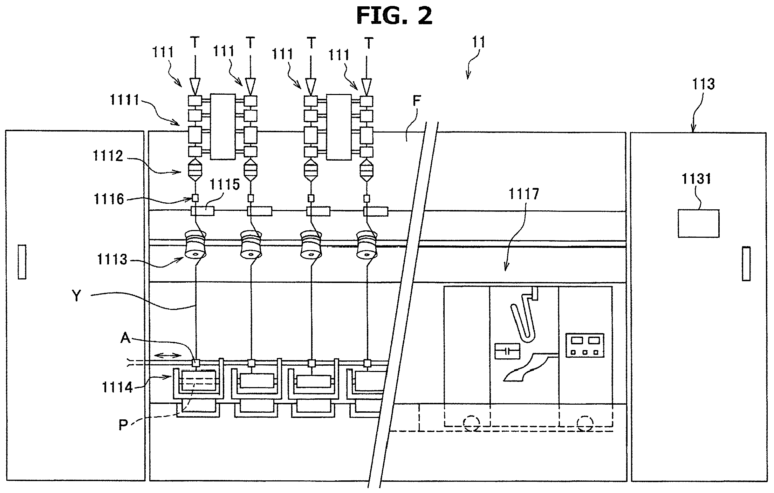

A configuration of the spinning systems 1-1, 1-2, ..., 1-n and the management server system 3 of the spinning management system 100 will be explained in detail below. At first, the spinning systems 1-1, 1-2, ..., 1-n of the spinning management system 100 are explained in detail by using FIGS. 1 and 2. A configuration of each of the spinning systems 1-1, 1-2, ..., 1-n is substantially the same except the number of the later-explained spinning machines 11 included therein. The number of the spinning machines 11 can vary depending on the scale and the like of the spinning mill. Therefore, a configuration of the spinning system 1-1 is explained below as an example. As shown in FIG. 1, the spinning system 1-1 includes the spinning machines 11 and a host management device (information collecting device) 13.

### (2-2) Detailed Configuration of Spinning Machine

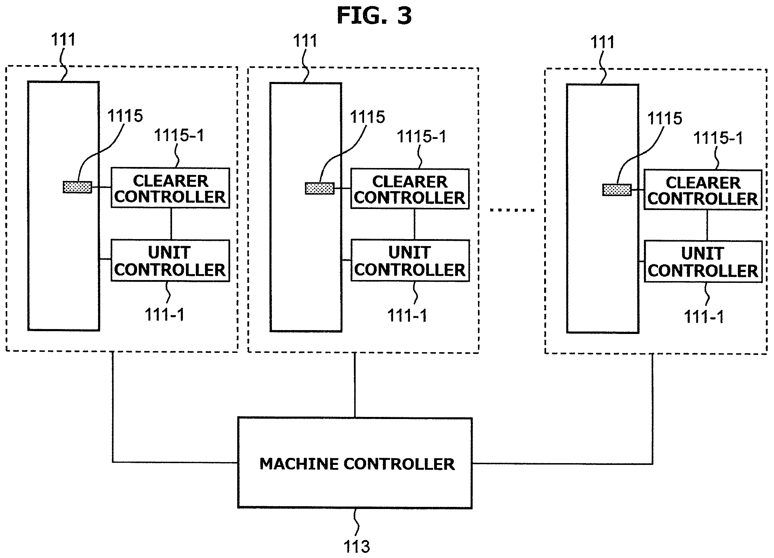

As shown in FIGS. 2 and 3, the spinning machine 11 includes a plurality of the spinning units 111 arranged side-by-side, a unit controller 111-1 and a clearer controller 1115-1 in each of the spinning units 111, a machine controller 113, a yarn joining device 1117, and a not-shown doffing device.

### (2-2-1) Spinning Machine

Each of the spinning units 111 spins a fiber bundle T to form the spun yarn Y and winds the spun yarn Y to form a package P. Specifically, the spinning unit 111 includes, in order from above to below, a drafting device 1111, a spinning device 1112, a yarn-slack removing device (yarn accumulating device) 1113, and a winding device 1114. Note that, the devices 1111 to 1114 can be arranged in this order from below to above.

The drafting device 1111 is arranged near a top edge of a frame F of the spinning machine 11. The drafting device 1111 draws the fiber bundle (sliver) T, which is supplied from a not-shown sliver case via a sliver guide, until the fiber bundle T has a predetermined width. The fiber bundle T drafted by the drafting device 1111 is supplied to the spinning device 1112.

The spinning device 1112 forms the spun yarn Y by twisting the fiber bundle T supplied from the drafting device 1111. For example, an air spinning device that twists the fiber bundle T by using a swirling air current can be used as the spinning device 1112. The yarn accumulating device 1113 is a roller member that is rotatable around an axis and on an outer peripheral surface of which the spun yarn Y of a certain amount can be wound to temporarily accumulate the spun yarn Y. When the yarn accumulating device 1113 is rotated at a predetermined rotational speed with the spun yarn Y wound on the outer peripheral surface thereof, the yarn accumulating device 1113 can pull the spun yarn Y from the spinning device 1112 at a predetermined speed and transport the spun yarn Y downstream (below). The winding device 1114 rotates the package P that is in contact with a not-shown winding drum, and winds the spun yarn Y in the package P while traversing the spun yarn Y thereby forming the package P of the spun yarn Y.

In the spinning unit 111 according to the present embodiment, a yarn clearer 1115 (an example of a yarn monitoring device) is arranged in the way of the spun yarn Y between the spinning device 1112 and the yarn accumulating device 1113. The yarn clearer 1115 is, for example, an optical clearer capable of detecting a thickness of and / or a yarn defect in the spun yarn Y based on an amount of transmitted light and / or reflected light when light is emitted on the spun yarn Y, or a capacitance clearer capable of detecting the thickness (fiber amount) of and / or the yarn defect in the spun yarn Y based on a capacitance between electrodes when the spun yarn Y is passed between the electrodes.

The yarn clearer 1115 monitors the spun yarn Y with a sensor when the spun yarn Y passes through the yarn clearer 1115. Upon determining that the spun yarn Y has the yarn defect (a portion in which the yarn has an abnormal thickness and the like, or a foreign substance included in the yarn), the clearer controller 1115-1 corresponding to the yarn clearer 1115 outputs a yarn-defect detection signal to the unit controller 111-1 (that is, to the unit controller 111-1 of the spinning unit 111 that includes the yarn clearer 1115 controlled by the clearer controller 1115-1) (or to the machine controller 113 or to some other controller). When the yarn-defect detection signal is output from the yarn clearer 1115, a cutter 1116 of the spinning unit 111 cuts the portion of the spun yarn Y having the yarn defect. Then, the drafting device 1111, the spinning device 1112, and the like are stopped, and winding performed in the winding device 1114 is also stopped.

Alternatively, upon detecting the yarn defect in the spun yarn Y, the clearer controller 1115-1 can output the yarn-defect detection signal to the unit controller 111-1, and the unit controller 111-1 that receives this signal can cut the spun yarn Y having the yarn defect after stopping the corresponding drafting device 1111 and the spinning device 1112.

Thereafter, the yarn joining device 1117 performs yarn joining of a yarn end from the spinning device 1112 and a yarn end from the package P. In this way, the yarn defect in the spun yarn Y can be removed in the spinning unit 111. After the yarn joining is completed, the formation of the spun yarn Y and the winding thereof on the package P are restarted.

### (2-2-2) Control Configuration of Spinning Machine

A control configuration of the spinning machine 11 is explained below by using FIG. 3. FIG. 3 is a view of the control configuration of the spinning machine 11. The clearer controller 1115-1 is, for example, a computer system having a CPU, a storage device such as a RAM and a ROM, and various interfaces. Alternatively, the clearer controller 1115-1 can be constructed with a SoC (System on a Chip) and the like. The clearer controller 1115-1 acquires from the yarn clearer 1115 information (for example, a received light amount in case of the optical yarn clearer or a capacitance in case of the capacitance yarn clearer) about the thickness and the like of the spun yarn Y, and outputs the yarn-defect detection signal when the yarn defect is present in the spun yarn Y. It is allowable that the clearer controller 1115-1 calculates information about the thickness and the like of the spun yarn Y by using the signal output from the yarn clearer 1115 and outputs this information to other controllers, or the clearer controller 1115-1 can output the signal output from the yarn clearer 1115 as it is to the other controllers.

The unit controller 111-1 is, for example, a computer system having a CPU, a storage device such as a RAM and a ROM, and various interfaces. Alternatively, the unit controller 111-1 can be constructed with a SoC (System on a Chip) and the like. The unit controller 111-1 controls various structural components of the spinning unit 111. Specifically, the unit controller 111-1 controls the various structural components of the spinning unit 111 based on the formation condition (spinning condition) of the spun yarn Y set in the later-explained machine controller 113 and the like. As a result, the spun yarn Y that matches with the set condition can be formed.

Moreover, the unit controller 111-1 detects the yarn-defect detection signal output from the clearer controller 1115-1 and an abnormality that has occurred in any other spinning unit 111. Thereafter, if necessary, the unit controller 111-1 notifies the detected abnormality to the machine controller 113 to stop the operation of various structural components of the spinning unit 111, to operate the cutter 1116 and / or the yarn joining device 1117 (perform automatic yarn joining process), and the like. Though no cut instruction for cutting the spun yarn Y has been output (or, though no yarn-defect detection signal has been received), when the unit controller 111-1 receives from the clearer controller 1115-1 a signal indicating that the thickness of the spun yarn Y is zero (signal indicating no spun yarn Y), the unit controller 111-1 determines that the spun yarn Y is cut naturally.

The unit controller 111-1 counts number of times of reception of the yarn-defect detection signal (that is, number of times of occurrence of the yarn defect) from the clearer controller 1115-1, and number of times of occurrence of an event in the corresponding spinning unit 111 (for example, occurrence of an abnormality in or stopping of the spinning unit 111, operation of the cutter 1116 and the yarn joining device 1117 (that is, performing the automatic yarn joining process), failure of the yarn joining process, and the like). Moreover, the occurrence of the yarn defect and the occurrence of the event are mapped with a timing of occurrence thereof and this data is recorded as a log (operating status).

In the present embodiment, one unit controller 111-1 is considered to control a 1-spindle spinning unit 111; however, the configuration is not limited to this, and one unit controller 111-1 can control a multiple-spindle (for example, 8-spindle) spinning unit 111.

The machine controller 113 is a computer system having a CPU, a storage device such as a RAM, a ROM, an SSD and / or HDD, and various interfaces such as network interfaces (for example, Ethernet (Registered Trademark) card). Moreover, the machine controller 113 includes, as shown in FIG. 2, a touch panel 1131 (for example, a display device obtained by combining a thin display device, such as a liquid crystal display device, and a touch panel device) for displaying various information about the spinning machine 11 and performing various settings of the spinning machine 11. The machine controller 113 collectively performs the control per spinning machine 11. Specifically, the machine controller 113 stores a set value input by the user by using the touch panel 1131 and the like, as well as transmits the set value to each of the unit controllers 111-1 and / or each of the clearer controllers 1115-1.

Moreover, the machine controller 113 acquires from each of the unit controllers 111-1 and / or each of the clearer controllers 1115-1 data necessary for calculating information about the operating status of the spinning machine 11. Specifically, the machine controller 113 acquires from the corresponding unit controller 111-1 the number of times the yarn-defect detection signal is output, the number of times of occurrence of the event, and the like in each of the spinning units 111. The machine controller 113 calculates and stores information about the operating status per spinning machine 11 by processing the acquired information (adding the number of times of occurrence, calculating an average value of the number of times of occurrence, and the like).

Apart from this, the machine controller 113 maps the occurrence of the events and the occurrence of the yarn defect in each of the spinning units 111 of the spinning machine 11 with the timing of the occurrence of each of the events and the yarn defects, combines such information per spinning machine 11, records the same as an event log, and stores the event log as information about the operating status of the spinning machine 11.

Furthermore, the machine controller 113 acquires a measured value (or calculated value) of the thickness of the spun yarn Y from the clearer controller 1115-1 or the unit controller 111-1. In the present embodiment, the machine controller 113 calculates information about the thickness of the spun yarn Y by calculating an average of the measured values or the calculated values of the acquired thickness of the spun yarn Y. Accordingly, the effect of a measurement error in the thicknesses of the spun yarns Y among the yarn clearers 1115 included in the spinning machine 11 can be suppressed. As a result, reliable information about the thickness of the spun yarn Y can be calculated.

In a configuration in which the unit controller 111-1 and the clearer controller 1115-1 do not calculate the thickness of the spun yarn Y, it is allowable that the machine controller 113 calculates the information about the thickness of the spun yarn Y based on a signal acquired from the yarn clearer 1115 via the clearer controller 1115-1.

In this manner, by using the information detected in the yarn clearer 1115 (the thickness of the spun yarn Y and the yarn-defect detection signal indicating the occurrence of the yarn defect), the information about the formed spun yarns Y can be acquired without actually measuring the thickness and the like thereof after performing the sampling of the spun yarns Y formed in the spinning machine 11.

The manner of sharing the processing among the clearer controller 1115-1, the unit controller 111-1, and the machine controller 113 explained above is not limited to this example. For example, it is allowable to perform in the machine controller 113 the control of all the spinning units 111 and the yarn clearers 1115 of the spinning machine 11, whereas the clearer controller 1115-1 and the unit controller 111-1 can perform only conversion (for example, A/D conversion or D/A conversion) and input and output of the signal. Alternatively, the clearer controller 1115-1 can count the number of times of detection of the yarn defect (the number of times the yarn-defect detection signal is output), and / or the unit controller 111-1 can count the number of times of occurrence of the event in each of the spinning units 111, whereas the machine controller 113 can only acquire and store this information. Which controller should perform which process can be suitably changed as desired based on an efficiency of each of the controllers, contents and / or quantity of the information to be processed, and the like.

### (2-3) Host Management Device

The host management device 13 is a computer system having a CPU, a storage device such as a RAM, a ROM, an SSD and / or HDD, and various interfaces such as network interfaces (for example, Ethernet (Registered Trademark) card). The host management device 13 acquires, at a predetermined interval, from the machine controllers 113 of the spinning machines 11 of the spinning system 1-1, as the spinning information information about the spinning machines 11, information about the spinning units 111 included in the spinning machines 11, and the information about the spun yarns Y, and stores the acquired spinning information in the storage device.

Specifically, the host management device 13 acquires from the machine controller 113 of each of the spinning machines 11, at the predetermined interval, the information about the thickness of the spun yarns Y formed in the spinning machines 11, the number of times the yarn-defect detection signal is output and the number of times of occurrence of the event in the spinning units 111, and the information about the formation conditions of the spun yarns Y set in the spinning machines 11, and based on the acquired information, generates the spinning information about a plurality of parameters about the spinning units 111 of the spinning system 1-1. Note that, the timing of acquiring the information is not limited to a regular timing but can be an irregular timing.

Moreover, the host management device 13 collects the spinning information acquired in the other spinning systems from a later-explained administration server 31 and / or the host management devices of other spinning systems 1-2, 1-3, ..., 1-n that are connected thereto via the network NW. Moreover, the host management device 13 transmits the stored spinning information to the administration server 31 and / or the host management devices of the other spinning systems 1-2, 1-3, ..., 1-n following such a request from the administration server 31 and / or the host management devices of the other spinning systems 1-2, 1-3, ..., 1-n. Accordingly, the spinning information stored in the spinning systems can be mutually shared among the spinning systems 1-1, 1-2, ..., 1-n. Note that, it is allowable to not mutually share the spinning information.

Moreover, it is allowable that only a part of the information included in the spinning information is mutually shared among the spinning systems 1-1, 1-2, ..., 1-n. For example, among the information included in the spinning information (the information about the quality of the spun yarns Y, the information about the formation conditions of the spun yarns Y, the information about the operating statuses of the spinning machines 11), only the information about the formation conditions of the spun yarns Y (yarn type table of the spun yarns Y) can be mutually shared.

As shown in FIG. 1, one or more client terminals C1 (for example, a personal computer, a portable terminal, a smartphone, and the like), for example, is connected to the host management device 13 via a LAN. Accordingly, the user of the spinning system 1-1 can use the client terminal C1 to see the spinning information of the spinning system 1-1 stored in the host management device 13, and the spinning information of the other spinning systems 1-2, 1-3, ..., 1-n shared mutually.

Moreover, a manager and the like of the spinning system 1-1 can access the host management device 13 by using, for example, a web browser of the client terminal C1, and can perform maintenance and the like of the host management device 13 by using a GUI (Graphical User Interface) displayed by the web browser upon accessing the host management device 13.

### (3) Management Server System

The management server system 3 manages the spinning systems 1-1, 1-2, ..., 1-n. Specifically, the management server system 3 includes the administration server (management device) 31. The administration server 31 is a computer system having a CPU, a storage device such as a RAM, a ROM, an SSD and / or HDD, and various interfaces such as network interfaces (for example, Ethernet (Registered Trademark) card). If the spinning management system 100 is a large-scale system, such as when the number of the spinning systems 1-1, 1-2, ..., 1-n installed is large, the administration server 31 can be a main frame computer including a plurality of computer boards (also called server boards and the like) having a CPU, a RAM, a ROM, and various interfaces, such as a network interface, and a large-capacity storage device.

The administration server 31 collects from the spinning systems 1-1, 1-2, ..., 1-n, via the network NW (WAN and the like), the spinning information stored in the spinning systems 1-1, 1-2, ..., 1-n, and stores the collected spinning information. The administration server 31 is communicably connected to the host management device 13 of each of the spinning systems 1-1, 1-2, ..., 1-n. The administration server 31 stores (collects), among the spinning information received from the host management device 13 of each of the spinning systems 1-1, 1-2, ..., 1-n, only that spinning information that is mapped with (is related to) identification information decided to have a previous permission to receive the same in the administration server 31. The other spinning information (for example, the spinning information that is not mapped with the identification information, or the spinning information that is mapped with identification information decided to have no previous permission to receive) is deleted without collecting.

The spinning information and the identification information of the spinning systems 1-1, 1-2, ..., 1-n are mapped and managed, and the administration server 31 collects only that spinning information that is mapped with the identification information decided to have a previous permission to receive the same. As a result, the administration server 31 can efficiently generate worthwhile management data from relatively small amount of the spinning information.

For example, when a model type and / or a manufacturing number of the spinning systems having the same (or similar) performance among the spinning systems 1-1, 1-2, ..., 1-n is used as "identification number decided to have a previous permission to receive", the spinning information from the spinning systems (spinning machines) having completely different performances can be discarded. By removing the effect of the performance of the spinning system (spinning machine) from the management data, for example, a worthwhile comparison of the quality of the spun yarn Y formed in the spinning system 1-1 and the quality of the spun yarns Y formed in the other spinning systems 1-2, 1-3, ..., 1-n can be performed.

The administration server 31 extracts two parameters (first parameter and second parameter) specified by the user among the different parameters included in the spinning information, and prepares as the management data a two-dimensional graph that visually represents a relation between those two parameters. By visually representing the relation between the first parameter and the second parameter with a two-dimensional graph, the administration server 31 can provide to the user the management data that is easy to understand.

### (4) Operation of Spinning Management System

### (4-1) Outline of Operation of Spinning Management System

An operation of the spinning management system 100 according to present embodiment is explained below. In the spinning management system 100 according to the present embodiment, the spinning information is acquired in each of the operating spinning systems 1-1, 1-2, ..., 1-n. Separately from the acquiring the spinning information, the administration server 31 of the management server system 3 receives and stores therein the spinning information acquired in the spinning systems 1-1, 1-2, ..., 1-n. Moreover, the administration server 31 extracts the two parameters selected by the user among the collected spinning information, and generates the management data by visually representing the relation between the two parameters with a two-dimensional graph. That is, the administration server 31 generates the management data such that the information about the extracted different parameters can be displayed graphically to be mutually mapped (related).

In the spinning management system 100, the spinning systems 1-1, 1-2, ..., 1-n and the administration server 31 operate independently from each other. Therefore, the operation of the spinning systems and the operation of the administration server are explained below separately.

### (4-2) Operation for Acquiring Spinning Information in Spinning System

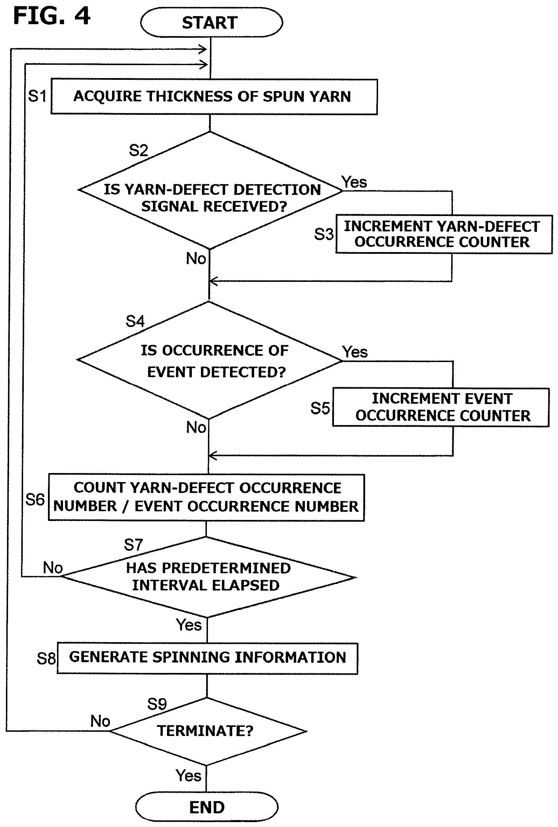

At first, an operation for acquiring the spinning information in the spinning systems 1-1, 1-2, ..., 1-n, is explained below by using FIG. 4. FIG. 4 is a flowchart of the operation for acquiring the spinning information in the spinning system. Because the operation performed by each of the spinning systems 1-1, 1-2, ..., 1-n is substantially the same, the operation for acquiring the spinning information in the spinning system 1-1 is explained below as an example. The operation of the spinning system 1-1 explained below can be implemented by executing a computer program stored in the storage device of the clearer controller 1115-1, the unit controller 111-1, the machine controller 113, and / or the host management device 13. Alternatively, this operation can be implemented with hardware such as the SoC (System on a chip) constituting the clearer controller 1115-1, the unit controller 111-1, the machine controller 113, and / or the host management device 13.

At first, information about the spinning units 111, the yarn joining device 1117, and the like of each of the spinning machines 11 is acquired (Steps S1 to S5). Specifically, the clearer controller 1115-1 receives, at a predetermined interval, from the yarn clearer 1115 that is controlled by the clearer controller 1115-1, a signal indicating a measured value of the formed spun yarn Y. Then, the clearer controller 1115-1, or the unit controller 111-1 that receives this signal from the clearer controller 1115-1, calculates the thickness of the spun yarn Y from the information contained in this signal. Then, the machine controller 113 calculates an average of the measured values or the calculated values of the spun yarns Y, which values can be input thereto from the clearer controller 1115-1 or the unit controller 111-1, or can be calculated by the machine controller 113 itself, to acquire information about the average value of the thicknesses of the spun yarns Y formed in the spinning machine 11 to which the machine controller 113 belongs (Step S1).

If the clearer controller 1115-1 outputs the yarn-defect detection signal ("YES" at Step S2), the corresponding unit controller 111-1 that received the yarn-defect detection signal performs increment of a yarn-defect occurrence counter that has been defined beforehand as a parameter (Step S3). By performing Steps S2 and S3, the value of the yarn-defect occurrence counter is cumulatively incremented each time the yarn-defect detection signal is generated. Thus, the yarn-defect occurrence counter represents the number of times the yarn defect occurs in each of the spinning units 111.

Furthermore, if the event occurs in the spinning unit 111 ("YES" at Step S4), the unit controller 111-1 records the occurred event in the event log and performs increment of an event occurrence counter that has been defined beforehand as a parameter (Step S5). By performing Steps S4 and S5, the value of the event occurrence counter is cumulatively incremented each time the event occurs. Thus, the event occurrence counter represents the number of times the event occurs in each of the spinning units 111.

In the spinning machine 11, typically, various events occur, apart from stopping of the spinning unit 111 because of the breakage of the spun yarn Y and performing of the yarn joining process, for example, stopping of the operation of the spinning machine 11 due to power failure, occurrence of an error in the spinning machine 11, and the like. When the event occurs in the spinning machine 11, because the machine controller 113 increments the event occurrence counter defined originally in the machine controller 113, the events occurring in the spinning machine 11 can be recorded as the operating status of the spinning machine 11.

Moreover, the unit controller 111-1 and the machine controller 113 can define one event occurrence counter per type of the events. If this configuration is adopted, the information about only some of the event occurrence counters can be included in the spinning information. In the present embodiment, information about number of times the spinning unit 111 stopped because of the breakage of the spun yarn Y, information about number of times the yarn joining processing is performed automatically (for example, the number of times the yarn joining device 1117 is operated), and information about the quality of the formed spun yarn Y, is included in the spinning information.

While Steps S1 to S5 are being performed, each of the unit controllers 111-1 transmits, at a predetermined interval, the values of the yarn-defect occurrence counter and the values of the event occurrence counter to the machine controller 113. The machine controller 113 adds the values of the respective counters received from the unit controllers 111-1 to calculate a yarn-defect occurrence number and an event occurrence number per event of the entire spinning machine 11 (Step S6).

While Steps S1 to S6 are being performed, the host management device 13, when the need arises, receives the spinning information of the other spinning systems 1-2, 1-3, ..., 1-n from the host management devices of the other spinning systems 1-2, 1-3, ..., 1-n or the administration server 31. Accordingly, the spinning information of the other spinning systems can be shared among the host management devices 13.

Moreover, while Steps S1 to S6 are being performed in the spinning machines 11, the host management device 13 determines whether the predetermined interval (for example, per shift of the spinning mill in which the spinning machines 11 are arranged (for example, after every 8 hours or 12 hours), after every several minutes or after every several hours from the last acquisition of the information, and the like) has elapsed (Step S7).

Upon determining that the predetermined interval has elapsed ("YES" at Step S7), the host management device 13 acquires the necessary information from the machine controller 113 to generate the spinning information (Step S8). Specifically, the host management device 13 acquires from each of the machine controllers 113 the information about the average value of the thicknesses of the spun yarns Y, the yarn-defect occurrence number, the event occurrence number, and the information about the set formation condition of the spun yarns Y in each of the spinning machines 11, and calculates various parameters to be included in the spinning information of the entire spinning system 1-1 based on the acquired information.

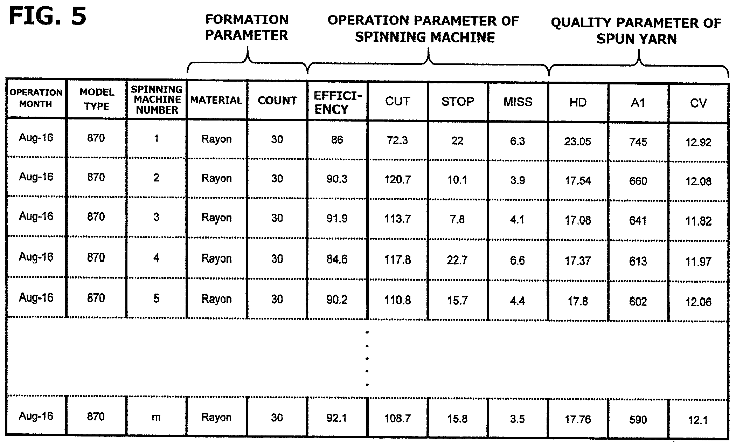

Then, the host management device 13 maps the calculated parameters with the identification information for identifying the spinning system 1-1 to generate the spinning information shown in FIG. 5. Accordingly, it can be shown that the generated spinning information is of the spinning system 1-1 (that is, the spinning system 1-1 to which the host management device 13 belongs). In the spinning information shown in FIG. 5, the model type (model name: 870) of the spinning machines 11 has been mapped with the other parameters. Apart from the manufacturing numbers of the spinning machines 11, for example, an identification number (manufacturing number and the like) and the like of the host management device 13 can be used as the identification information. Alternatively, an address on the network NW of the host management device 13 (for example, a global IP address) and / or a MAC address can be used as the identification information.

The spinning information shown in FIG. 5 is spinning information of the spinning system 1-1 having "m" units of the spinning machines 11. The spinning information shown in FIG. 5 includes an operation month of the spinning system 1-1 (the operation month is August 2016 in the example shown in FIG. 5), the model type of each of the spinning machines 11 (model name: 870), the formation parameter of the spun yarns Y set in each of the spinning machines 11, the parameter about the operating status of each of the spinning machines 11, and the parameter about the quality of the spun yarns Y formed in each of the spinning machines 11.

In the spinning information shown in FIG. 5, the formation parameter includes raw material of the spun yarns Y (rayon in the example shown in FIG. 5) set in each of the spinning machines 11 and the count of the spun yarn Y (count 30 in the example shown in FIG. 5).

Moreover, the spinning information shown in FIG. 5 includes an operation efficiency, CUT, STOP, and MISS of each of the spinning machines 11 as the parameter about the operating status of the spinning units 111. "CUT" is an average value per hour of the number of times the unit controller 111-1 that received the yarn-defect detection signal automatically performed the yarn joining process. For example, "CUT" can be calculated based on number of times the generation of the yarn-defect detection signal and the operation of the yarn joining device 1117 happened almost simultaneously. "STOP" is an average value per one hour of a value obtained by adding the number of times the unit controller 111-1 that received the yarn-defect detection signal did not automatically perform the yarn joining process and the number of times the spun yarn Y broke naturally (the thickness of the spun yarn Y is zero as well as the yarn joining device 1117 did not operate). For example, "STOP" can be calculated from a value obtained by adding number of times of occurrence of a timing at which the yarn defect signal is output but the yarn joining device 1117 is not operated and number of times the spinning unit 111 is stopped because the spun yarn Y broke naturally. "MISS" is a value obtained by dividing number of times the yarn joining process failed by number of times the yarn joining process is attempted and expressed in percentages. The "number of times the yarn joining process is attempted" represents number of times the movement of the yarn joining device 1117 is restarted after the yarn joining device 1117 was stopped.

Furthermore, the spinning information shown in FIG. 5 includes HD (called "hairiness data") that represents a standard deviation in unevenness (variation) in the thickness of the spun yarn Y having a certain length, A1 that represents a frequency of occurrence of a certain type of the yarn defect, and CV that represents uniformity of the spun yarn Y as the parameter about the quality of the spun yarns Y. "HD" is a value calculated based on a length and number of hairy matter protruding from the body of the spun yarn Y. For example, "HD" can be calculated from a duration for which and number of times a signal waveform output from the yarn clearer 1115 represents occurrence of the hairy matter. "A1" is a frequency for which the thickness of the spun yarn Y is within a certain thickness range over a predetermined length range of the spun yarn Y (part of the spun yarn Y occurs such that the thickness thereof is within 100% to 150% over the length of 1 mm to 10 mm of the spun yarn Y). For example, "A1" can be calculated based on a duration for which the thickness of the spun yarn Y is within the above range in the signal waveform output from the yarn clearer 1115. "CV" can be calculated by dividing the unevenness (variation) in the thickness of the spun yarn Y having a certain length by an average value of the thickness of the spun yarn Y.

While Steps S1 to S8 are performed, for example, when an instruction to stop the spinning system 1-1 is input in the machine controller 113 of the spinning machine 11 and / or the host management device 13 ("YES" at Step S9), the process for acquiring the spinning information at Steps S1 to S8 is terminated. Otherwise ("NO" at Step S9), the acquisition of the information necessary for generation of the spinning information and the generation of the spinning information are performed repeatedly.

### (4-3) Operation of Management Server System

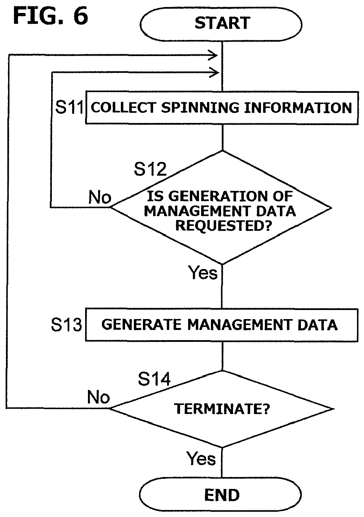

An operation of the management server system 3 (administration server 31) according to the present embodiment is explained below by using FIG. 6. FIG. 6 is a flowchart of the operation performed by the management server system 3. The operation of the management server system 3 explained below is implemented by executing a computer program stored in the storage device of the administration server 31 and / or a client terminal C2. At first, the administration server 31 collects, at a predetermined interval, the spinning information from the host management devices 13 of the spinning systems 1-1, 1-2, ..., 1-n (Step S11).

Specifically, when the predetermined interval has elapsed, the host management devices 13 of the spinning systems 1-1, 1-2, ..., 1-n transmit the spinning information stored in their storage devices to the administration server 31 via the network NW.

After receiving the spinning information from the host management devices 13, the administration server 31, for example, determines whether the "model type" has been mapped with the received spinning information and / or whether the model type mapped with the spinning information matches with the identification number decided to have the previous permission to receive. When the model type mapped with the spinning information matches with the identification number decided to have the previous permission to receive the spinning information, the administration server 31 stores the spinning information in the storage device. On the other hand, when the model type is not mapped with the spinning information, or the mapped identification number does not match with the identification number decided to have the previous permission to receive, the administration server 31 discards the spinning information without storing in the storage device.

It is allowable that the host management device 13 transmits to the administration server 31, when transmitting the spinning information, with the spinning information, as the identification information, information to identify the host management device 13, such as the manufacturing number, the MAC address and / or the IP address of the host management device 13. The administration server 31 stores in the storage device thereof a list of the identifying information of the host management device 13 from which the reception of the spinning information is to be permitted. When the identifying information received with the spinning information matches with the identifying information included in the above list, the administration server 31 stores the spinning information in the storage device. As a result, the administration server 31 can distinguish the spinning information decided to be received in order to generate the worthwhile management data from the other spinning information without checking the contents of the spinning information.

The "predetermined interval" at which the host management device 13 transmits the spinning information is, for example, a period determined based on the operation shift in the spinning mill and is, for example, a period having a duration of 8 hours or 12 hours. The administration server 31, for example, adds the spinning information collected for one month per 8 hours or 12 hours, or calculates an average of the spinning information of one month.

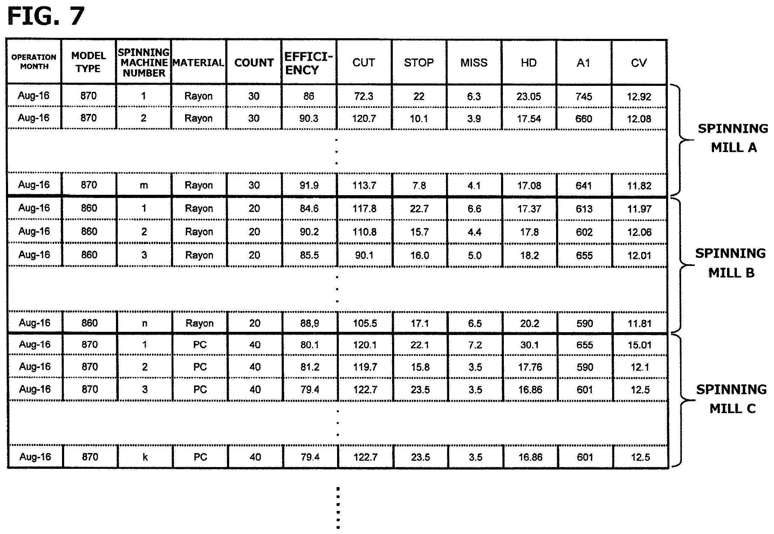

Subsequently, the administration server 31 joins the spinning information received, and stored, from the spinning systems (the host management devices 13) to generate the collected data shown in FIG. 7. The collected data shown in FIG. 7 is data obtained by joining in the line direction (the portrait direction of FIG. 7) of the spinning information the spinning information of a spinning system arranged in a spinning mill A (including m units of spinning machines), spinning information of a spinning system arranged in a spinning mill B (including n units of spinning machines), and spinning information of a spinning system arranged in a spinning mill C (including k units of spinning machines).

The administration server 31 can join all the received spinning information unconditionally to generate one collected data, or can select the spinning information to be joined based on a predetermined condition to generate one collected data. Moreover, for example, the spinning information of the same operation month can be joined to generate the collected data, the spinning information of the same spinning system can be joined to generate the collected data, or the spinning information having the same formation parameter (the material of the spun yarn Y and / or the count of the spun yarn Y) can be joined to generate the collected data. Moreover, the administration server 31 can update the existing collected data by joining the received spinning information to the existing collected data already stored in the storage device.

During the generation of the collected data (during collection of the spinning information), for example, if the client terminal C2 of the management server system 3 accesses the administration server 31 via the web browser and the like and requests the generation of the management data ("YES" at Step S12), the administration server 31 starts the generation of the management data (Step S13). Specifically, for example, the management data is generated and displayed on a display device of the client terminal C2 in the manner explained below.

At first, the administration server 31 causes the user to select which parameters among the parameters included in the collected data are to be represented as the two-dimensional graph to generate the management data. For example, a selection screen that allows selection of the two parameters to be used in the generation of the management data is displayed on the web browser of the client terminal C2 used by the user. Moreover, the administration server 31 displays on the web browser information that asks the user to select the condition for extracting the data among the data included in the selected parameter. As a result, it is possible to set conditions for limiting the data to be extracted, for example, such as "extract only the data of the same operation month", "extract only the data of the same model type", and "extract only the data having the same formation parameter".

When the user of the client terminal C2 selects on the web browser the two parameters to be used to generate the management data and the condition for extracting the data, the administration server 31 extracts the two selected parameters from the collected data (extracts data in any two columns of the collected data shown in FIG. 7). Furthermore, the administration server 31 deletes the data, among the data included in the two extracted parameters, that does not match with the selected condition.

Then, the administration server 31 considers the data included in one of the parameters (first parameter) between the two parameters as an X-coordinate and considers the data included in the other parameter (second parameter) as a Y-coordinate, prepares as the management data a two-dimensional graph that represents the relation between the two parameters, and displays this graph on the web browser of the client terminal C2.

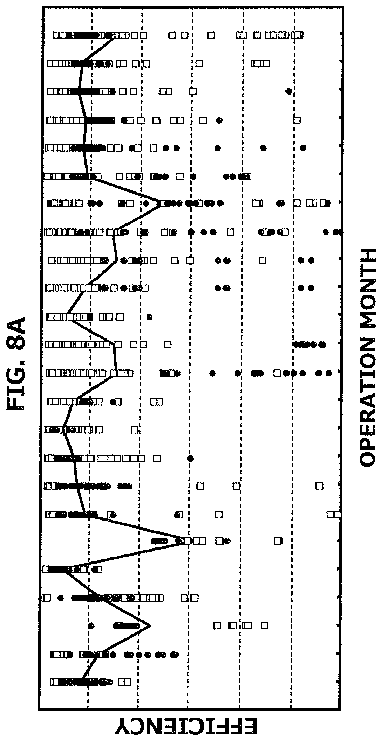

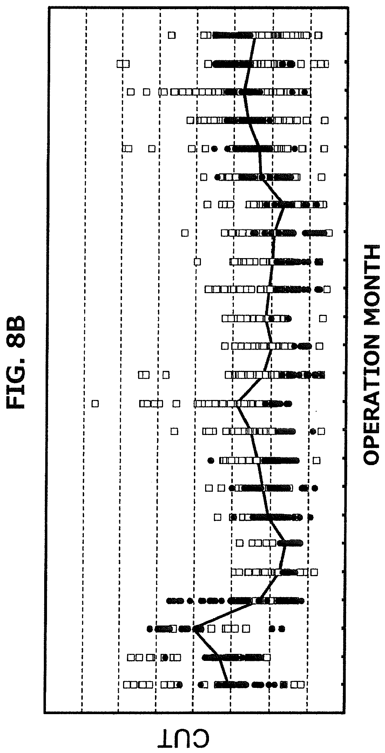

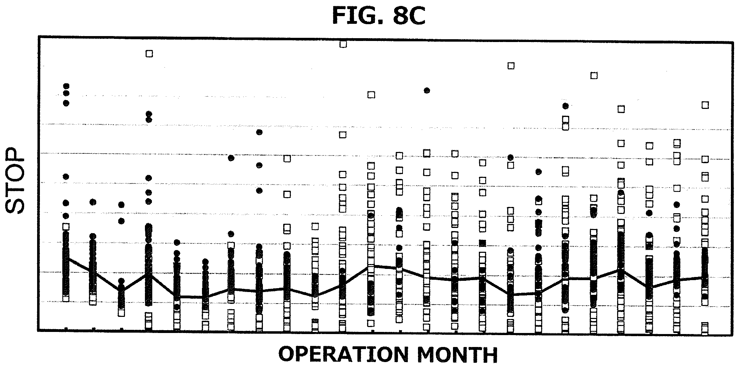

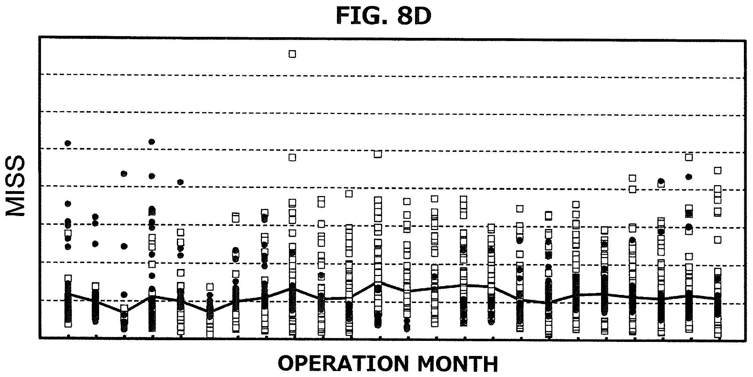

For example, the management data when the operation month of the spinning system is taken as the first parameter and the operating status of the spinning units 111 (or spinning machines 11) is taken as the second parameter will be, for example, like the one shown in FIGS. 8A to 8D. In the example shown in FIGS. 8A to 8D, a condition that the formation parameter of the spun yarn Y is the same has been selected as the condition for limiting the data. FIG. 8A depicts an example of management data representing a relation between the operation month and the efficiency. FIG. 8B depicts an example of management data representing a relation between the operation month and CUT. FIG. 8C depicts an example of management data representing a relation between the operation month and STOP. FIG. 8D depicts an example of management data representing a relation between the operation month and MISS.

In the example of the management data explained below, solid circles correspond to a first visual data that represents a relation between the operation month and the operating status in a selected spinning system (for example, the spinning system owned by the user). Hollow squares correspond to a second visual data that represents a relation between the operation month and the operating status in the other spinning systems. Note that, for example, one solid circle or one hollow square corresponds to information of one spinning machine 11. By including in the management data the first visual data and the second visual data, a visual comparison of the status (operating status) of the spinning machines in a particular spinning system can be performed with the status (operating status) of the spinning machines in the other spinning systems.

In the examples of the management data explained below, a solid line corresponds to data (average visual data) that visually represents an averaged spinning information obtained by calculating an average of the spinning information acquired from at least three spinning systems among the spinning systems 1-1, 1-2, ..., 1-n. By including in the management data the data that visually represents the averaged spinning information, for example, what is the status of the information of the spinning machines of the particular spinning system owned by the user compared to an overall average of the spinning systems 1-1, 1-2, ..., 1-n can be visually confirmed.

In the present embodiment, the averaged spinning information is calculated by calculating an average of the spinning information acquired from at least three spinning systems. Accordingly, the averaged spinning information having a certain high level of reliability can be calculated. However, the configuration is not limited thereto, and the spinning information acquired from four or more spinning systems among the spinning systems 1-1, 1-2, ..., 1-n can be averaged when calculating the averaged spinning information. The averaged spinning information can be calculated by averaging the spinning information acquired from some of the spinning systems (for example, the spinning systems arranged in the same locality) among all the spinning systems managed by the management server system 3.

From the management data indicating the relation between the operation month and the efficiency shown in FIG. 8A, a temporal change in the operation efficiency of the spinning systems 1-1, 1-2, ..., 1-n can be visually confirmed. From the example shown in FIG. 8A, for example, it can be confirmed that the operation efficiency (solid circles in FIG. 8A) of the particular spinning system owned by the user temporarily dropped below the operation efficiency (hollow squares and solid line in FIG. 8A) in the other spinning systems; however, for example, by reconsideration and / or adjustment of the setting of the spinning system owned by the user, the operation efficiency in the recent months has been improved (higher than the average value of the operation efficiencies of the other spinning systems).

On the other hand, for example, when the operation efficiency of a spinning system owned by a particular user in the recent months drops below the (average value of) operation efficiency of the other spinning systems, a customer support staff of the spinning system can suggest this user to reconsider and / or adjust the setting of the spinning system owned by the user.

From the management data indicating the relation between the operation month and CUT shown in FIG. 8B, a temporal change in CUT of the spinning systems 1-1, 1-2, ..., 1-n can be visually confirmed. From the example shown in FIG. 8B, for example, it can be confirmed that the frequency of occurrence of CUT in the particular spinning system owned by the user (solid circles in FIG. 8B), is comparable with or lower than the frequency of occurrence of CUT in the other spinning systems (hollow squares and solid line in FIG. 8B) in the range of the operation months represented by the management data in FIG. 8B. However, from the example shown in FIG. 8B, it can be confirmed that, in recent months, the frequency of occurrence of CUT in the spinning system owned by the user is somewhat higher than the frequency of occurrence of CUT in the other spinning systems.

In such a situation, the customer support staff of the spinning system can suggest, for example, the user to reconsider the setting of the yarn defect removal when the spun yarn Y is to be cut in the spinning unit 111.

From the management data indicating the relation between the operation month and STOP shown in FIG. 8C, a temporal change in STOP of the spinning systems 1-1, 1-2, ..., 1-n can be visually confirmed. From the example shown in FIG. 8C, for example, it can be confirmed that the frequency of occurrence of STOP in the particular spinning system owned by the user (solid circles in FIG. 8C), is comparable with the frequency of occurrence of STOP in the other spinning systems (hollow squares and solid line in FIG. 8C) in the range of the operation months represented by the management data in FIG. 8C.

In such a situation, the customer support staff of the spinning system can inform, for example, the user that an ease of breaking of the spun yarn Y formed in his spinning system is substantially the same as that of the spun yarn Y formed in the other spinning systems so that there is no big issue in the setting of the formation parameter of the spun yarn Y formed in his spinning system.

From the management data indicating the relation between the operation month and MISS shown in FIG. 8D, a temporal change in MISS of the spinning systems 1-1, 1-2, ..., 1-n can be visually confirmed. From the example shown in FIG. 8D, for example, it can be confirmed that the frequency of occurrence of MISS in the particular spinning system owned by the user (solid circles in FIG. 8D), is comparable with the frequency of occurrence of MISS in the other spinning systems (hollow squares and solid line in FIG. 8D) in the range of the operation months represented by the management data in FIG. 8D.

In such a situation, the customer support staff of the spinning system can inform, for example, the user that there is no big issue in the setting of the formation parameter of the spun yarn Y.

From the management data shown in FIGS. 8A to 8D that visually indicate the relations between the operation month and the various parameters, seasonal dependence of the various parameters (the quality of the spun yarn Y and / or the operating status of the spinning systems), for example, the quality per season of the spun yarn Y, can be visually confirmed.

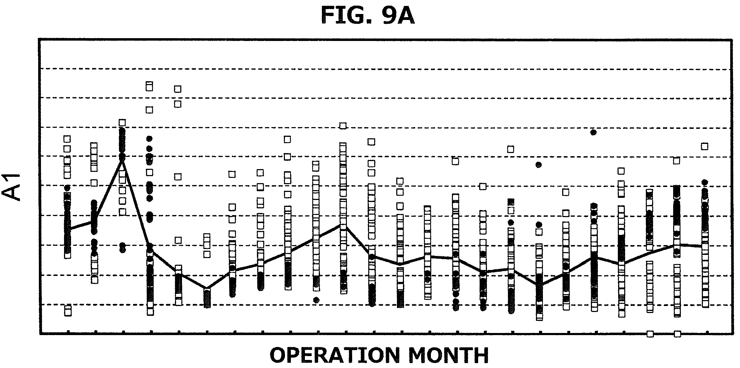

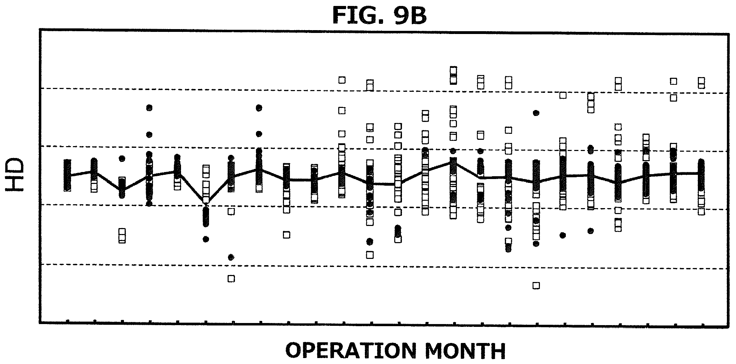

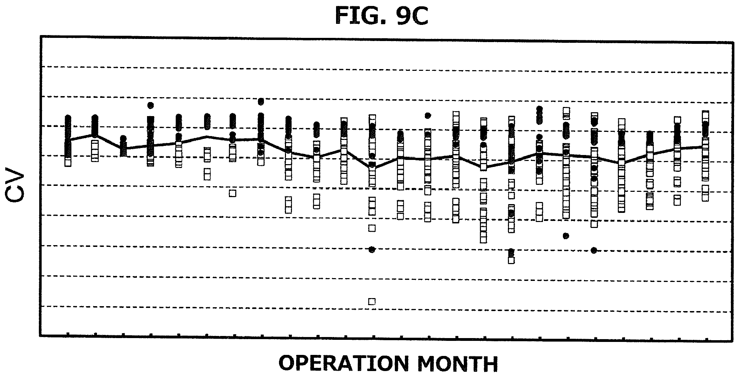

Management data represented with a two-dimensional graph when the operation month of the spinning system is taken as the first parameter and the information about the quality of the formed spun yarn Y is taken as the second parameter will be, for example, like the one shown in FIGS. 9A to 9C. From the management data indicating the relation between the operation month and the information about the quality of the spun yarn Y, a temporal change in the quality of the spun yarn Y formed in the spinning machine of the spinning systems 1-1, 1-2, ..., 1-n can be visually confirmed. FIG. 9A depicts an example of management data representing a relation between the operation month and A1. FIG. 9B depicts an example of management data representing a relation between the operation month and HD. FIG. 9C depicts an example of management data representing a relation between the operation month and CV.

In the generation of the management data of FIGS. 9A to 9C, a condition that the formation parameter (production parameter) of the spun yarn Y is the same has been selected as the condition for limiting the data.

In the example of the management data shown in FIG. 9A representing the relation between the operation month and A1, for example, a frequency of occurrence of the yarn defect classified as "A1" (solid circles in FIG. 9A) in the spun yarn Y formed in the spinning system owned by the user temporarily drops below a frequency of occurrence of the yarn defect in the spun yarns Y formed in the other spinning systems (hollow squares and solid line in FIG. 9A). On the other hand, it can be confirmed that, in recent months, the frequency of occurrence of the yarn defect in the spun yarn Y formed in the spinning system owned by the user is higher than the frequency of occurrence of the yarn defect in the spun yarns Y formed in the other spinning systems.

In such a situation, the customer support staff of the spinning system can suggest, for example, the user to reconsider the setting of the formation parameter of the spun yarn Y formed in the spinning system owned by the user and / or to adjust the spinning system (spinning machine).

In the example of the management data shown in FIG. 9B representing the relation between the operation month and HD, for example, the unevenness in the thickness of the spun yarn Y formed in the spinning system owned by the user (solid circles in FIG. 9B) is substantially the same as that of the spun yarn Y formed in the other spinning systems (hollow squares and solid line in FIG. 9B). In such a situation, the customer support staff of the spinning system can inform, for example, the user that there is no particular issue in the setting of the formation parameter of the spun yarn Y.

In the example of the management data shown in FIG. 9C representing the relation between the operation month and CV, for example, the uniformity of the spun yarn Y formed in the spinning system owned by the user (solid circles in FIG. 9C) is substantially the same as that of the spun yarn Y formed in the other spinning systems (hollow squares and solid line in FIG. 9C). In such a situation, the customer support staff of the spinning system can inform, for example, the user that there is no particular issue in the setting of the formation parameter of the spun yarn Y.

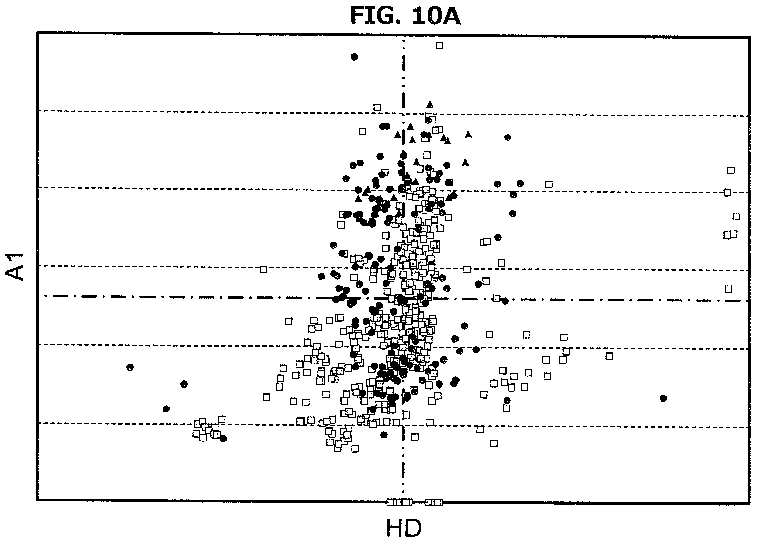

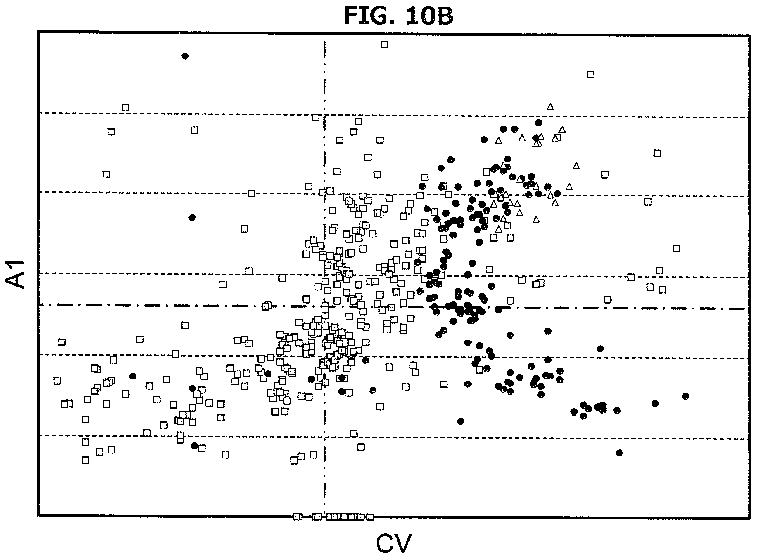

Furthermore, in the generation of the management data, both the selected parameters can be taken as the information about the qualities of the spun yarn Y. Specifically, the information about a certain quality can be taken as the first parameter (parameter about a first quality) whereas the information about a different quality can be taken as the second parameter (parameter about a second quality). By selecting the parameters about the two qualities, for example, management data like the one shown in FIGS. 10A and 10B in which a correlation between the qualities (the first quality and the second quality) of the spun yarns Y formed in the spinning units 111 can be visually confirmed. FIG. 10A depicts an example of management data representing a relation between HD and A1. FIG. 10B depicts an example of management data representing a relation between CV and A1.

In the generation of the management data of FIGS. 10A and 10B, a condition that the formation parameter of the spun yarn Y is the same has been selected as the condition for limiting the data.

In the example of the management data shown in FIG. 10A, for example, are shown a correlation between "HD" (hairiness data) and the frequency of occurrence of the yarn defect classified as "A1" in the spun yarn Y formed in the spinning system owned by the user (solid circles in FIG. 10A), and a correlation between "HD" (hairiness data) and the frequency of occurrence of the yarn defect classified as "A1" in the spun yarn Y formed in the other spinning systems (hollow squares in FIG. 10A). Solid triangles in FIG. 10A show a correlation between "HD" and "A1" of past one month in the spun yarn Y formed in the spinning system owned by the user. Moreover, in the example of the management data shown in FIG. 10A, an average value of "HD" (two-dot chain line in FIG. 10A) and an average value of "A1" (alternate long and short dash line in FIG. 10A) are shown.

In the example of the management data shown in FIG. 10A representing the relation between HD and A1, for example, the correlation between HD and A1 of the spun yarn Y formed in the spinning system owned by the user and the correlation between HD and A1 of the spun yarn Y formed in the other spinning systems have almost the same trend. Specifically, as the trend of HD and A1 of the spun yarn Y, it can be confirmed that while HD (hairiness data) is centered in the neighborhood of the average value, A1 (frequency of occurrence of the yarn defect) is spread widely.

In the example of the management data shown in FIG. 10B, for example, are shown a correlation between "CV" (uniformity) and the frequency of occurrence of the yarn defect classified as "A1" in the spun yarn Y formed in the spinning system owned by the user (solid circles in FIG. 10B), and a correlation between "CV" (uniformity) and the frequency of occurrence of the yarn defect classified as "A1" in the spun yarn Y formed in the other spinning systems (hollow squares in FIG. 10B). Hollow triangles in FIG. 10B show a correlation between "CV" and "A1" of past one month in the spun yarn Y formed in the spinning system owned by the user. Moreover, in the example of the management data shown in FIG. 10B, an average value of "CV" (two-dot chain line in FIG. 10B) and an average value of "A1" (alternate long and short dash line in FIG. 10B) are shown.

In the example of the management data shown in FIG. 10B representing the relation between CV and A1, for example, it can be confirmed that CV of the spun yarn Y formed in the spinning system owned by the user has relatively larger values. On the other hand, with respect to the relation between CV and A1 of the spun yarn Y formed in the other spinning systems, it can be confirmed that A1 increases as CV increases (positive correlation).

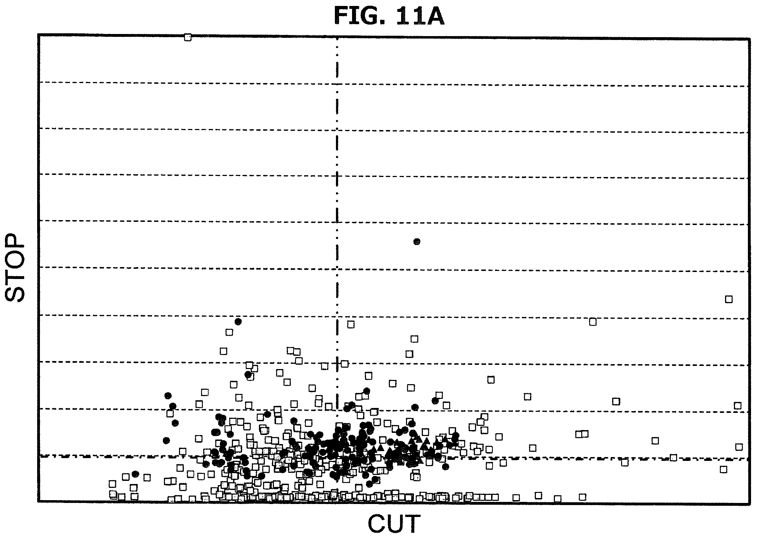

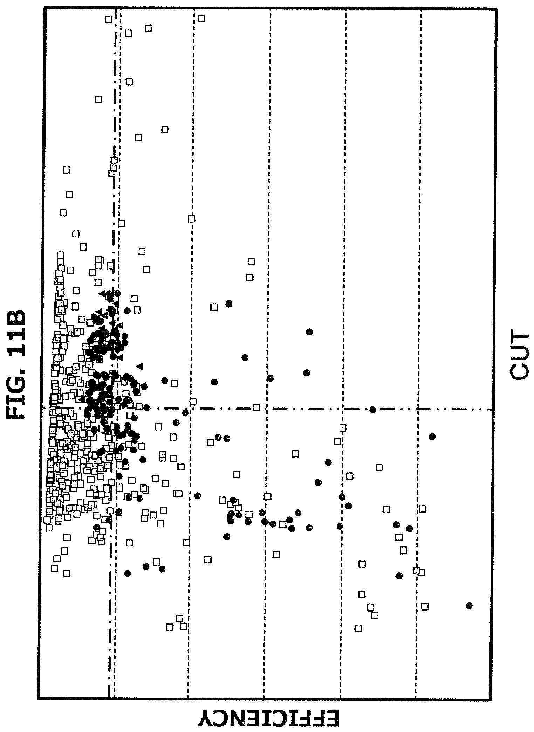

Furthermore, in the generation of the management data, both the selected parameters can be taken as the information about the operating status of the spinning unit 111. Specifically, the information about a certain operating status can be taken as the first parameter (parameter about a first operating status) whereas the information about a different operating status can be taken as the second parameter (parameter about a second operating status). By selecting the parameters about the two operating statuses, for example, management data like the one shown in FIGS. 11A and 11B in which a correlation between the operating statuses (the first operating status and the second operating status) of the spinning units 111 can be visually confirmed. FIG. 11A depicts an example of management data representing a relation between CUT and STOP. FIG. 11B depicts an example of management data representing a relation between CUT and the efficiency.

In the generation of the management data of FIGS. 11A and 11B, a condition that the formation parameter of the spun yarn Y is the same has been selected as the condition for limiting the data.

In the example of the management data shown in FIG. 11A, for example, are shown a correlation between "CUT" and "STOP" generated in the spinning units 111 of the spinning system owned by the user (solid circles in FIG. 11A), and a correlation between "CUT" and "STOP" generated in the spinning units 111 of the other spinning systems (hollow squares in FIG. 11A). Solid triangles in FIG. 11A show a correlation between "CUT" and "STOP" of past one month in the spinning units 111 of the spinning system owned by the user. Moreover, in the example of the management data shown in FIG. 11A, an average value of "CUT" (two-dot chain line in FIG. 11A) and an average value of "STOP" (alternate long and short dash line in FIG. 11A) are shown.

In the example of the management data shown in FIG. 11A representing the relation between CUT and STOP, for example, in the correlation between CUT and STOP in the spinning system owned by the user, while a frequency of occurrence of STOP is somewhat higher, the trend is substantially the same as that of the correlation between CUT and STOP in the other spinning systems. Specifically, it can be confirmed that while the frequency of occurrence of STOP tends to be low, the frequency of occurrence of CUT is spread widely.

For example, in the correlation between CUT and STOP shown in FIG. 11A, when the frequency of occurrence of CUT is low but the frequency of occurrence of STOP is high (when data points concentrate in the left upper part in FIG. 11A), it can be considered that the efficiency of the formation of the spun yarn Y has dropped. In such a situation, a suggestion to adjust the formation parameter of the spun yarn Y and / or to adjust the spinning system can be given.

In the example of the management data shown in FIG. 11B, for example, are shown a correlation between "CUT" and "efficiency" of the spun yarn Y formed in the spinning system owned by the user (solid circles in FIG. 11B), and a correlation between "CUT" and "efficiency" of the spun yarn Y formed in the other spinning systems (hollow squares in FIG. 11B). Solid triangles in FIG. 11B show a correlation between "CUT" and "efficiency" of past one month in the spinning system owned by the user. Moreover, in the example of the management data shown in FIG. 11B, an average value of "CUT" (two-dot chain line in FIG. 11B) and an average value of "efficiency" (alternate long and short dash line in FIG. 11B) are shown.

In the example of the management data shown in FIG. 11B representing the relation between CUT and the efficiency, for example, it can be confirmed that the efficiency of the spinning system owned by the user tends to be somewhat lower than the efficiency of the other spinning systems. In contrast, it can be confirmed that the frequency of occurrence of CUT (the spun yarn Y is cut by using the cutter 1116 because of the occurrence of the yarn defect) tends to be the same in all the spinning systems, and the frequency of occurrence of CUT is spread widely. In such a situation, a suggestion of the setting (the other settings of the formation parameter of the spun yarn Y and / or the spinning system) that improves the efficiency of the spinning system owned by the user and / or a suggestion to adjust the spinning system can be given.

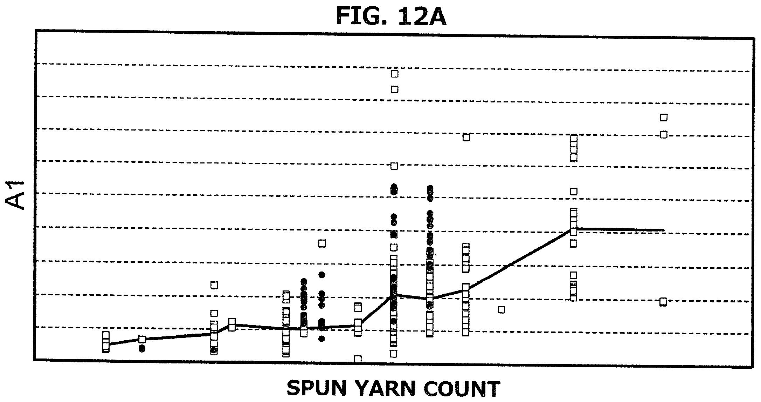

Alternatively, for example, the formation parameter of the spun yarn Y (for example, the count of the spun yarn Y) can be taken as the first parameter whereas some parameter other than the formation parameter (information about the quality of the spun yarn Y, information about the operating status of the spinning system, and the like) can be taken as the second parameter. For example, when the count of the spun yarn Y is taken as the first parameter and "A1" of each of the spun yarns Y is taken as the second parameter, management data like the one shown in FIG. 12A can be obtained.

Specifically, in FIG. 12A, solid circles represent a relation between the count of the spun yarn Y formed in the spinning system owned by the user and the frequency of occurrence of the yarn defect classified as "A1" in the spinning system owned by the user. Moreover, hollow squares represent a relation between the count of the spun yarn Y formed in the other spinning systems and the frequency of occurrence of the yarn defect classified as "A1" in the other spinning systems. Moreover, a continuous line represents a relation between the count of the spun yarn Y formed in the spinning system and an average value of the frequency of occurrence of the yarn defect classified as "A1" in the spinning system.

In the example of the management data shown in FIG. 12A, for example, it can be confirmed that the frequency of occurrence of the yarn defect in the spun yarn Y of an intermediate count formed in the spinning system owned by the user tends to be higher than the frequency of occurrence of the yarn defect in the spun yarn Y of the intermediate count formed in the other spinning systems. In such a situation, for example, a suggestion to adjust the other formation parameters of the spun yarn Y of that count can be given. In the management data shown in FIG. 12A, it can be seen that the frequency of occurrence of the yarn defect classified as "A1" tends to increase following an increase in the count of the spun yarn Y. From such a trend, it can be clearly understood that the definition of the yarn defect classified as "A1" corresponds to formation of a spun yarn Y that is thicker than a predetermined thickness.

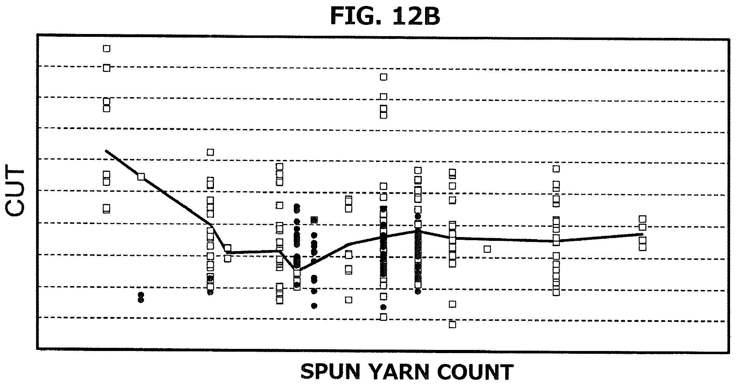

Moreover, for example, when the count of the spun yarn Y is taken as the first parameter and the frequency of occurrence of "CUT" is taken as the second parameter, management data like the one shown in FIG. 12B can be obtained. Specifically, in FIG. 12B, solid circles represent a relation between the count of the spun yarn Y formed in the spinning system owned by the user and the frequency of occurrence of "CUT" in the spinning system owned by the user. Moreover, hollow squares represent a relation between the count of the spun yarn Y formed in the other spinning systems and the frequency of occurrence of "CUT" in the other spinning systems. Moreover, a continuous line represents a relation between the count of the spun yarn Y formed in the spinning system and an average value of the frequency of occurrence of "CUT" in the spinning system.

In the example of the management data shown in FIG. 12B, for example, it can be confirmed that the frequency of occurrence of CUT in the spun yarn Y of a thin count formed in the spinning system owned by the user tends to be lower than the frequency of occurrence of CUT in the spun yarn Y of the thin count formed in the other spinning systems. In such a situation, it can be confirmed that, particularly, thin spun yarns Y are being formed with less occurrence of the yarn defects.

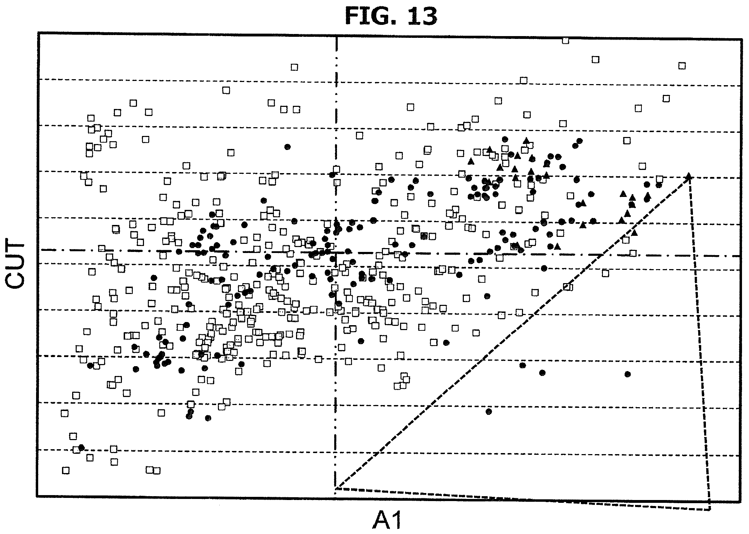

Alternatively, for example, the information (parameter) about the operating statuses of the spinning units 111 can be taken as the first parameter whereas the information about the quality of the formed spun yarns Y can be taken as the second parameter. Moreover, for example, when "A1" of the spun yarn Y is taken as the first parameter and "CUT" is taken as the second parameter, management data like the one shown in FIG. 13 can be obtained. FIG. 13 depicts an example of management data representing a relation between A1 and CUT. The management data shown in FIG. 13 has been obtained by fixing the material of the spun yarn Y to "Rayon" and fixing the count to "count 30".

Specifically, in FIG. 13, solid circles represent a correlation between the frequency of occurrence of the yarn defect classified as "A1" in the spinning system owned by the user and the frequency of occurrence of "CUT" in the spinning system owned by the user. Solid triangles in FIG. 13 show a correlation between "A1" and "CUT" of past one month in the spinning system owned by the user. Moreover, hollow squares represent a relation between the frequency of occurrence of the yarn defect classified as "A1" in the other spinning systems and the frequency of occurrence of "CUT" in the other spinning systems. Moreover, in the example of the management data shown in FIG. 13, an average value of "A1" (two-dot chain line in FIG. 13) and an average value of "CUT" (alternate long and short dash line in FIG. 13) are shown.

In the example of the management data shown in FIG. 13, for example, it can be confirmed that the relation between the frequency of occurrence of the yarn defect classified as "A1" and the frequency of occurrence of "CUT" has a positive correlation, that is, the frequency of occurrence of "CUT" increases with an increase in the frequency of occurrence of "A1". However, it can also be confirmed that the frequency of occurrence of "CUT" is not necessarily low when the frequency of occurrence of "A1" is less.

In such a situation, the customer support staff of the spinning system can recommend, for example, to the user of the spinning system that to set a formation condition of the spun yarn Y (for example, the quality of the raw material, the setting of the spinning units 111, and the like) that lowers "A1" (minute yarn defect that is short but somewhat thick) is a requirement to lower "CUT" (occurrence of the automatic yarn joining process).

Note that, an area surrounded with a dotted line triangle in the right lower corner in the management data of FIG. 13, is an area where there is no data. That is, this fact relates to the explanation that, no data in which the frequency of occurrence of "CUT" is less (no spinning machine 11 in which the frequency of occurrence of "CUT" is low) exists in the area where the frequency of occurrence of "A1" is high.

After the generation of the management data is completed or during the collection of the spinning information, unless an instruction to stop the administration server 31 (management server system 3) ("NO" at Step S14) is given, Steps S11 to S13 are repeatedly performed. On the other hand, when the instruction to stop the administration server 31 ("YES" at Step S14) is given, after the operations at Steps S11 to S13 are stopped, and the administration server 31 is stopped.

If the host management device 13 should transmit the spinning information while the administration server 31 has been stopped, the host management device 13 temporarily stores the spinning information to be transmitted in the storage device and the like, and the spinning information stored temporarily can be transmitted to the administration server 31 after detecting that the administration server 31 has started operation. Accordingly, an undesired situation in which the spinning information is deleted without collecting by the administration server 31 can be prevented.

Because the spinning management system 100 according to the present embodiment has the above explained structures and features, the user of the spinning management system 100 can visually grasp the meaning of the enormous quantity of the spinning information obtained from the spinning systems 1-1, 1-2, ..., 1-n (spinning machines 11) from the management data generated by the administration server 31. As a result, the user can easily perform consideration relating to the use of the spinning systems 1-1, 1-2, ..., 1-n (spinning machines 11) based on the enormous quantity of the spinning information.

### (5) Common Subject Matter of Embodiment

The first embodiment has the following structures and functions. The spinning management system 100 (example of the spinning management system) according to the first embodiment includes the spinning systems 1-1, 1-2, ..., 1-n (examples of the spinning groups) and that administration server 31 (example of the management device). Each of the spinning systems 1-1, 1-2, ..., 1-n includes the spinning machines 11 (example of the spinning machine) and at least one host management device 13 (example of the information collecting device). The administration server 31 is communicably connected to the host management device 13 of each of the spinning systems 1-1, 1-2, ..., 1-n. In the spinning machine 11, the spinning units 111 (example of the spinning unit) that spin the fiber to form the spun yarns Y are arranged side by side. The host management device 13 collects the information about the parameters as the spinning information about the spinning machines 11 and about the spun yarns Y. The administration server 31 extracts the information about at least two parameters among the information about the parameters collected by the host management device 13 included in at least one of the spinning systems, and generates the management data such that the extracted information about the parameters can be displayed graphically to be mutually mapped. Moreover, a spinning management method according to the first embodiment is a spinning management method implemented on the spinning systems 1-1, 1-2, 1-3, ..., 1-n each including the spinning machines 11 (example of the spinning machine), and at least one host management device 13 (example of the information collecting device) that collects information about the parameters as the spinning information about the spinning machines 11 and the spun yarns Y formed by each of the spinning machines 11. The spinning management method includes extracting information about at least two parameters from the spinning information collected by the host management device 13 (example of the information collecting device); and generating the management data such that the extracted information about the parameters can be displayed graphically to be mutually mapped.

### (6) Other Embodiments

The embodiments of the present invention are explained above; however, the present invention is not necessarily limited to these embodiments. The present invention can be implemented by making various changes in a range that does not deviate from the gist of the present invention. Particularly, the embodiments and variations explained in the present specification can be optionally combined as desired. Each of the processes performed in the machine controller 113, the host management device 13, and / or the administration server 31 (management server system 3) explained by using the flowcharts in the first embodiment can be appropriately changed without departing from subject matter of the invention. Moreover, the order of the processes explained by using the flowcharts can be appropriately changed, also, some of those processes can be performed simultaneously.

### (A) Other Embodiments Relating to Contents of Spinning Information

As shown in FIGS. 5, 7, and the like, the parameters of the spinning information (collected data) according to the first embodiment include the material and the count of the spun yarn Y as the formation conditions (formation parameters) of the spun yarn Y; CUT, STOP, and MISS as the operating status (operation parameter) of the spinning machines 11; and HD (hairiness data), A1 (yarn defect), and CV (uniformity) as the quality (quality parameter) of the spun yarns Y. However, not limited to the above parameters, for example, other parameters such as MLW (Lower Yarn Miss), MUP (Upper Yarn Miss), MSL (Splice Miss), and the like can be included in the spinning information (collected data). Moreover, for example, a spinning speed can be included as the formation parameter. The administration server 31 can generate the management data indicating the correlation between the spinning speeds (the speeds at which the spinning machines form the spun yarns) and the parameters other than the spinning speeds. For example, the spinning speed is selected as the first parameter and the quality of the spun yarn or the operating status (operation) of the spinning machine is selected as the second parameter, and the management data indicating the correlation between both the parameters can be generated. Accordingly, the user who saw the management data can easily find out the most suitable spinning speed for the operation of the spinning machine and the quality of the spun yarn Y. Alternatively, the administration server 31 can generate the management data indicating the correlation between the formation parameter other than the spinning speeds and the quality of the spun yarns Y or the operating statuses of the spinning machines. In such a configuration, the user who saw the management data can easily find out the formation condition (spinning condition) for the spun yarn Y that is most suitable for every type of the yarns or the spinning raw materials.

### (B) Other Embodiments Relating to Calculation of Spinning Information

In the first embodiment, the host management device 13 calculates the parameters to be included in the spinning information as needed. Not limited to the above, for example, the parameters to be included in the spinning information can be calculated beforehand in the machine controller 113, and the parameters can be transmitted to the host management device 13. Moreover, the machine controller 113 can acquire at a predetermined interval (short period) the thicknesses of the spun yarns Y measured by the yarn clearers 1115 belonging to the spinning machines 11, calculate an average value of the acquired measured values of the thicknesses of the spun yarns Y, and transmit the average value to the host management device 13 as the information about the thickness of the spun yarns Y.

Alternatively, the machine controller 113 can acquire at a predetermined interval (short period) the thicknesses of the spun yarns Y measured by the yarn clearers 1115 belonging to the spinning machines 11, and transmit the acquired thicknesses as it is to the host management device 13 without processing the thicknesses. As a result, the processing load on the machine controller 113 can be reduced.

### (C) Other Embodiments Relating to Distribution of Management Data

In the first embodiment, an example in which the instruction to generate the management data is given by the client terminal C2 of the management server system 3, and the management data is displayed on the display device of the client terminal C2 is only explained. Not limited to the above, for example, the instruction to generate the management data can be given by the client terminals C1 of the spinning systems 1-1, 1-2, ..., 1-n, and the generated management data can be displayed on the display devices of the client terminals C1.

Moreover, the management data once generated in the administration server 31 can be converted into data of a predetermined format (for example, PDF format, image data, and the like), and the data can be stored in the storage device of the administration server 31. As a result, the administration server 31 needs not again generate the management data generated once. As a result, information processing load on the administration server 31 can be reduced.

Furthermore, the configuration is not limited to a case in which the management data is generated based on the instruction from the client terminal C1 or C2. That is, the administration server 31, for example, can autonomously generate the management data at a predetermined interval (e.g., every month, every three months, every year, and the like) with the conditions set beforehand. Moreover, the generated management data can be stored in the storage device of the administration server 31, or can be transmitted to a predetermined host management device 13.

### (D) Other Embodiments Relating to Display Method of Management Data

In the first embodiment, the management data is displayed in the form of the two-dimensional graphs. For example, scatter diagrams can be used as the two-dimensional graphs. As a result, the administration server 31 can generate the management data that is easier to understand. However, not limited to the above, the administration server 31 can generate as the management data multi-dimensional graphs having more than two dimensions. For example, the administration server 31 can extract three parameters from the spinning information, and can generate as the management data a three-dimensional graph that represents the relation between the three parameters.

### (E)

Alternatively, the administration server 31 can generate the management data based on the spinning information of only one spinning system. In this case, when displaying the management data, the spinning information of only the one spinning system can be displayed, or in addition to displaying the spinning information of the one spinning system, an average of the spinning information of the other spinning systems can be displayed.

### (F)

In the above embodiments, the yarn clearer is arranged in the spinning unit of the spinning machine, and the information about the quality of the spun yarn Y can be acquired from the yarn clearer. However, the information about the quality of the spun yarns Y can be acquired from some other devices or machines. In the above embodiments, the spinning machine is a so-called air spinning machine and forms the spun yarn Y by using the air spinning machine. However, for example, the spun yarn Y can be formed by using a ring spinning frame. In this case, while the information about the formation condition of the spun yarns Y and the information about the operating statuses of the spinning machines can be acquired from the spinning machines, the information about the quality of the spun yarns Y can be acquired from the yarn clearers arranged in the automatic winders that form the packages by winding the spun yarns spun by using the ring spinning frame. Even in this case, the administration server 31 can generate the management data in the same manner as in the above embodiments.

### (G)

The information collecting device that acquires the spinning information can be a device like the host management device 13 that centrally manages the spinning machines according to the embodiments. Moreover, in a configuration in which the spinning machines can mutually share the spinning information, the machine controller of one of those spinning machines can function as the information collecting device.

## Claims

1. A spinning management system (100) comprising:
a plurality of spinning groups (1-1, 1-2, 1-3, ..., 1-n) each including a plurality of spinning machines (11) and at least one information collecting device (13); and
a management device (31) communicably connected to the information collecting device (13) of each of the spinning groups (1-1, 1-2, 1-3, ..., 1-n), **characterized in that**
a plurality of spinning units (111) that respectively spins fiber to form a spun yarn (Y) is arranged side by side in the spinning machines (11),
the information collecting device (13) collects information about a plurality of parameters as spinning information about the spinning machines (11) and the spun yarns (Y), and
the management device (31) extracts information about at least two parameters among the information about the parameters collected by the information collecting device (13) included in at least one of the spinning groups (1-1, 1-2, 1-3, ..., 1-n), and generates management data such that the extracted information about the parameters can be displayed graphically to be mutually mapped.

2. The spinning management system (100) as claimed in Claim 1, **characterized in that** the management device (31) extracts information about a first parameter and information about a second parameter among the information about the parameters, and generates the management data such that a relation between the information about the first parameter and the information about the second parameter can be displayed graphically.

3. The spinning management system (100) as claimed in Claim 2, **characterized in that**
the first parameter is an operation month of the spinning machines (11), and
the second parameter is a parameter about a quality of the spun yarns (Y) formed in the spinning machines (11).

4. The spinning management system (100) as claimed in Claim 2, **characterized in that**
the first parameter is a parameter about a first quality of the spun yarns (Y), and
the second parameter is a parameter about a second quality of the spun yarns (Y).

5. The spinning management system (100) as claimed in Claim 2, **characterized in that**
the first parameter is an operation month of the spinning machines (11), and
the second parameter is a parameter about an operating status of the spinning machines (11).

6. The spinning management system (100) as claimed in Claim 2, **characterized in that**
the first parameter is a parameter about a first operating status of the spinning machines (11), and
the second parameter is a parameter about a second operating status of the spinning machines (11).

7. The spinning management system (100) as claimed in Claim 2, **characterized in that**
the first parameter is a parameter about a formation condition of the spun yarns (Y), and
the second parameter is one between a parameter about an operating status of the spinning machines (11) and a parameter about a quality of the spun yarns (Y).

8. The spinning management system (100) as claimed in Claim 7, **characterized in that** the first parameter is a speed at which the spinning machines (11) form the spun yarns (Y).

9. The spinning management system (100) as claimed in any one of Claims 1 to 8, **characterized in that** the management data includes a first visual data that visually represents the spinning information in one of the spinning groups (1-1, 1-2, 1-3, ..., 1-n) and a second visual data that visually represents the spinning information in other of the spinning groups (1-1, 1-2, 1-3, ..., 1-n).

10. The spinning management system (100) as claimed in any one of Claims 1 to 9, **characterized in that** the management data includes averaged visual data that visually represents averaged spinning information obtained by calculating an average of the spinning information acquired from at least three spinning groups (1-1, 1-2, 1-3, ..., 1-n).

11. The spinning management system (100) as claimed in any one of Claims 1 to 10, **characterized in that**
each of the spinning units (111) includes a yarn monitoring device (1115) that detects a defect of the spun yarn (Y), and
the spinning information includes information about the defects of the spun yarns (Y) detected by the yarn monitoring devices (1115).

12. The spinning management system (100) as claimed in any one of Claims 1 to 11, **characterized in that**
the information collecting device (13) manages by mapping identification information for identifying the spinning group (1-1, 1-2, 1-3, ..., 1-n) to which the information collecting device (13) belongs with the spinning information acquired by the information collecting device (13), and
the management device (31) collects the spinning information mapped with the identification information.

13. The spinning management system (100) as claimed in any one of Claims 1 to 12, **characterized in that**
one between the information collecting device (13) and the management device (31) obtains one value from information about some parameters among the parameters per predetermined unit and generates the management data based on the value, wherein
the predetermined unit is one among the spinning machines (11), the spinning groups (1-1, 1-2, 1-3, ..., 1-n), and the formation condition of the spun yarns (Y).

14. A spinning management method implemented on a plurality of spinning groups (1-1, 1-2, 1-3, ..., 1-n) each including a plurality of spinning machines (11), and at least one information collecting device (13) that collects information about a plurality of parameters as spinning information about the spinning machines (11) and spun yarns (Y) formed by the spinning machines (11), comprising:
extracting information about at least two parameters from the spinning information collected by the information collecting device (13); and
generating management data such that the extracted information about the parameters can be displayed graphically to be mutually mapped.
